# EUROPEAN PATENT SPECIFICATION

(11) **EP 4 134 168 B1**
(45) Date of publication and mention of the grant of the patent: **17.06.2026**
(21) Application number: 21852454.4
(22) Date of filing: 30.07.2021
(51) Int. Cl.: B05C 5/02, B05C 11/10, H01M 4/04

(54) **MULTIPLE-SLOT DIE COATER**
MEHRSCHLITZDÜSENBESCHICHTER
COUCHEUSE À FILIÈRE À FENTES MULTIPLES

(30) Priority: 03.08.2020 KR 20200097073; 22.07.2021 KR 20210096692
(43) Date of publication of application: 15.02.2023
(73) Proprietor: LG Energy Solution, Ltd., Seoul 07335 (KR)
(72) Inventor: LEE, Taek-Soo, Daejeon 34122 (KR); JEON, Shin-Wook, Daejeon 34122 (KR); CHOY, Sang-Hoon, Daejeon 34122 (KR)
(74) Representative: Plasseraud IP
(86) International application number: PCT/KR2021/010019
(87) International publication number: WO 2022/030901

(56) References cited:
- EP-A1- 3 549 678
- EP-B1- 1 004 931
- KR-A- 20200 037 662
- US-A- 5 030 484
- US-A- 5 424 100
- US-A- 5 733 605
- US-A- 5 962 075
- US-A1- 2019 351 446

## Description

### TECHNICAL FIELD

The present disclosure relates to a multi-slot die coater capable of simultaneously forming two or more layers by wetting. In particular, the present disclosure relates to a multi-slot die coater that has improved a deviation in a width direction of a slot gap caused by a structural feature including a thin die block. The present application claims priority to Korean Patent Application Nos. 10-2020-0097073 and 10-2021-0096692 filed on August 3, 2020 and July 22, 2021, respectively, in the Republic of Korea.

### BACKGROUND ART

As technology development and demand for mobile devices increase, the demand for secondary batteries as an energy source is rapidly increasing, and such secondary batteries essentially include an electrode assembly which is a power generation element. The electrode assembly has a form in which a positive electrode, a separator, and a negative electrode are stacked at least once, and the positive electrode and the negative electrode are prepared by coating and drying a positive electrode active material slurry and a negative electrode active material slurry on a current collector made of aluminum foil and copper foil, respectively. In order to equalize charging/discharging features of secondary batteries, the positive electrode active material slurry and the negative electrode active material slurry should be uniformly coated on the current collector, and a slot die coater is conventionally used.

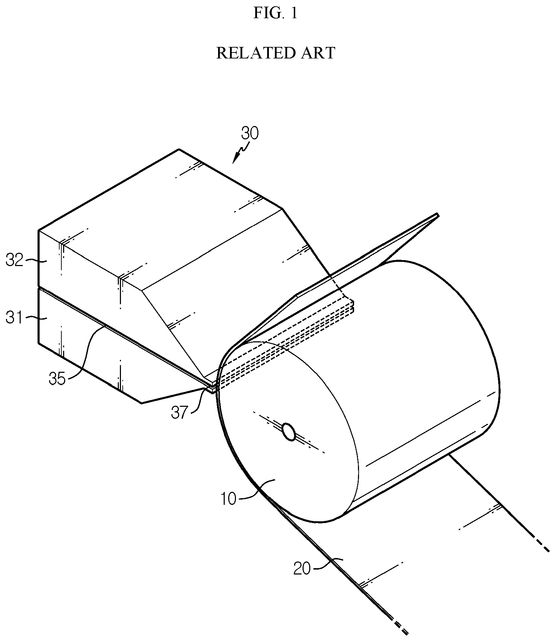

FIG. 1 shows an example of a coating method using a conventional slot die coater.

Referring to FIG. 1, in an electrode manufacturing method using the slot die coater, an electrode active material slurry discharged from a slot die coater 30 is applied on an current collector 20 transferred by a coating roll 10. The electrode active material slurry discharged from the slot die coater 30 is widely applied to one surface of the current collector 20 to form an electrode active material layer. The slot die coater 30 includes two die blocks 31 and 32 and forms a single slot 35 between the two die blocks 31 and 32, and may form the electrode active material layer of one layer by discharging one type of electrode active material slurry through a discharge port 37 communicatively connected to the single slot 35.

In order to manufacture a secondary battery of high energy density, the thickness of the electrode active material layer which was about 130 µm gradually increased to reach 300 µm. When the thick electrode active material layer is formed with the conventional slot die coater 30, since migration of a binder and a conductive material in the active material slurry deepens during drying, a final electrode is manufactured non-uniformly. In order to solve this problem, when coating is performed two times such as applying thinly and drying the electrode active material layer and then applying and drying the electrode active material layer, a disadvantage is that it takes a long time. In order to simultaneously improve electrode performance and productivity, a dual slot die coater capable of simultaneously applying two types of electrode active material slurries is required.

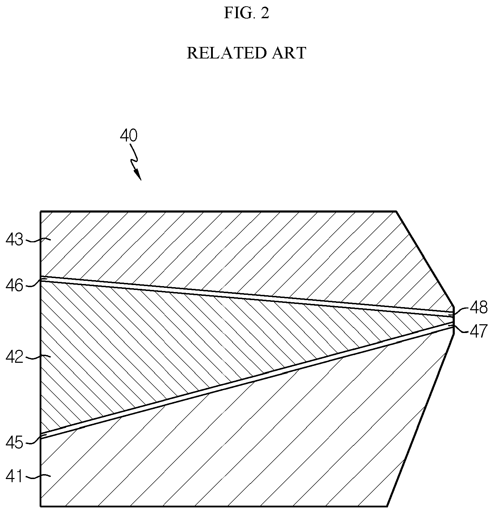

FIG. 2 is a cross-sectional view of the conventional dual slot die coater along a traveling direction (machine direction (MD)) of a current collector.

Referring to FIG. 2, a dual slot die coater 40 is configured by assembling three die blocks 41, 42, and 43. Two slots 45 and 46 are provided because the slots are formed between the die blocks 41, 42 and 43 adjacent to each other. By simultaneously discharging two types of electrode active material slurries through discharge ports 47 and 48 communicatively connected to the slots 45 and 46, respectively, electrode active material layers of two layers may be simultaneously formed by continuously applying an additional electrode active material slurry on an electrode active material layer formed by a previously applied electrode active material slurry.

Since a process using the dual slot die coater 40 should use electrode active material slurries simultaneously discharged from the different discharge ports 47 and 48, it is quite difficult to form each electrode active material layer to a desired thickness.

In general, since the thickness of each electrode active material layer is affected by the discharge amount of each of electrode active material slurries through the discharge ports 47 and 48, and the discharge amount of each of electrode active material slurries is greatly affected by the size (a slot gap) of each of the discharge port 47 and 48, in order to produce a desired thickness, it is necessary to repeat a task of disassembling and reassembling each die block while experimentally performing a coating process several times to adjust the slot gap and check the discharge amount again. However, this slot gap is not only a variable that is adjusted sensitively enough to change greatly even according to the fastening strength of bolts used for assembling between the die blocks 41, 42, and 43, but also may be changed even by the force through which the electrode active material slurry is discharged. In particular, in order to stably perform uniform application in the width direction of the dual slot die coater 40 perpendicular to the MD or in the width direction (transverse direction (TD)) of the current collector, uniform dimension accuracy in the width direction is required. Since the width of the dual slot die coater 40 also increases in order to use a current collector of a long width for an increase in productivity, it is more difficult to uniformly control the slot gap in the width direction.

Since a slot die coater constitutes a slot on a coupling surface of die blocks, basically three die blocks 41, 42, and 43 are required to include the two slots 45 and 46 like the dual slot die coater 40. In order to configure a device having a foot print and volume similar to the conventional slot die coater 30 including one slot, the thickness of each of the die blocks 41, 42, and 43 must be thin, and for this reason, there is a problem of being structurally vulnerable to deformation and torsion inevitably. When deformation or torsion occurs, the painstakingly adjusted slot gap is twisted, which is a serious problem of causing defects in the electrode process. Furthermore, in a multi-slot die coater in which the number of die blocks is further increased by including two or more slots, this problem will become more serious.

In order to solve this problem, when the size of each of the die block 41, 42, and 43 is vaguely increased (change in the angle), a discharge direction is changed, which causes deterioration of coating process ability. And, even if deformation and torsion are improved by increasing the thickness of each of the die blocks 41 and 43 located outside among the three die blocks 41, 42, and 43, supplementation of deformation of the die block 42 which is structurally weakest and located halfway is still a difficult problem.

US 2019/351446 A1 and EP 1 004 931 B1 disclose slot die coaters.

### DISCLOSURE

### Technical Problem

The present disclosure is designed to solve the problems of the related art, and therefore the present disclosure is directed to providing a multi-slot die coater capable of improving a problem of being structurally vulnerable to deformation and torsion in a multi-slot die coater which basically includes three or more die blocks.

In particular, the present disclosure is also directed to providing a multi-slot die coater that has improved a deviation in a width direction of a slot gap caused by a structural feature including a thin die block.

However, the problems to be solved by the present disclosure are not limited to the above problems, and other problems that are not mentioned will be clearly understood by those skilled in the art from the description of the invention described below.

### Technical Solution

In one aspect of the present invention , there is provided a multi-slot die coater as detailed in claim 1.

The angle formed by the first surface of the intermediate die block facing the upper die block and the second surface of the intermediate die block facing the lower die block may be equal to or less than 70 degrees.

When an angle formed by a surface of the upper die block facing the first surface and another surface adjacent to the surface is referred to as an angle of the upper die block, an angle formed by a surface of the lower die block facing the second surface and another surface adjacent to the surface is referred to as an angle of the lower die block, and the angle formed by the first surface of the intermediate die block facing the upper die block and the second surface of the intermediate die block facing the lower die block is referred to as an angle of the intermediate die block, the angle of the upper die block, the angle of the intermediate die block, and the angle of the lower die block may all add up to a maximum of 180 degrees.

The lower die block, the intermediate die block, and the upper die block respectively may include a lower die lip, an intermediate die lip, and an upper die lip forming front end portions thereof, a lower discharge port communicatively connected to the lower slot may be formed between the lower die lip and the intermediate die lip, and an upper discharge port communicatively connected to the upper slot may be formed between the intermediate die lip and the upper die lip, the multi-slot die coater may extrude and apply an electrode active material slurry on a surface of a continuously traveling substrate through at least one of the lower slot and the upper slot, and the angle formed by the first surface and the second surface may be determined so that an angle formed by the lower discharge port and the upper discharge port is within a range in which an electrode active material slurry discharged from the upper discharge port and an electrode active material slurry discharged from the lower discharge port do not form a vortex immediately after being simultaneously discharged.

The multi-slot die coater may extrude and apply an electrode active material slurry on a surface of a continuously traveling substrate through at least one of the lower slot and the upper slot and a direction in which the electrode active material slurry is discharged may lie almost horizontally such that the multi-slot die coater is installed, the first surface may lie almost horizontally and an opposite side of the upper die block facing the first surface also may lie almost horizontally, and surfaces of the lower die block, the intermediate die block, and the upper die block opposite to the direction in which the electrode active material slurry is discharged may lie almost vertically.

The first intermediate die block may be fixedly coupled to the lower die block, and the second intermediate die block may be fixedly coupled to the upper die block.

The lower die block, the intermediate die block, and the upper die block respectively may include a lower die lip, an intermediate die lip, and an upper die lip forming front end portions thereof, a lower discharge port communicatively connected to the lower slot may be formed between the lower die lip and the intermediate die lip, an upper discharge port communicatively connected to the upper slot may be formed between the intermediate die lip and the upper die lip, and a predetermined step may be formed between the lower discharge port and the upper discharge port.

The multi-slot die coater may further include: a first spacer interposed between the lower die block and the intermediate die block to adjust a width of the lower slot, and a second spacer interposed between the intermediate die block and the upper die block to adjust a width of the upper slot.

The lower die block may include a first manifold configured to accommodate a first coating solution and communicatively connected to the lower slot, and the intermediate die block may include a second manifold configured to accommodate a second coating solution and communicatively connected to the upper slot.

The invention is as defined by the claims.

### Advantageous Effects

According to the present disclosure, an angle of a die block is limited to more than a certain range so that deformation or torsion of the die block which is structurally vulnerable due to its thin thickness may be improved. The present disclosure proposes the minimum angle of the die block, in particular the minimum angle of an intermediate die block, which causes only an acceptable level of deformation. According to the present disclosure, even considering that the die block is deformed by the force of a fastening bolt and the pressure of a discharged electrode active material slurry, there is an effect of uniformly controlling the coating amount by maintaining a uniform (±2%) slot gap.

When a bolt fastening pressure is lowered by reducing the bolt force to minimize the deformation of the die block, the electrode active material slurry may leak from a coupling surface between die blocks. Since the die block of the present disclosure has an angle that minimizes deformation, the die block may be used without leakage of the electrode active material slurry by sufficiently applying the bolt force.

Conventionally, a slot gap was changed even by the pressure of the electrode active material slurry, and in particular, there was a big difference in the slot gap between the side and the center in the TD. Since the die block of the present disclosure has the angle that minimizes deformation, even if deformation occurs due to the pressure of the supplied electrode active material slurry, the deformation occurs within an acceptable level, and thus it is possible to obtain a coating product of uniform quality, in particular, an electrode for a secondary battery by using a multi-slot die coater with a uniform slot gap.

As described above, according to the present disclosure, it is possible to limit the minimum acceptable range of deformation and torsion by controlling the angle of the die block. Even if the discharge pressure of the electrode active material slurry increases, the effect of maintaining the once adjusted slot gap is excellent. This has the effect of securing coating process ability and securing reproducibility.

Using such a multi-slot die coater, it is possible to uniformly form a coating layer, in particular, an electrode active material layer, to a desired thickness, and preferably, simultaneous coating of two or more types of electrode active material slurries is possible, and thus there are effects that both performance and productivity are excellent.

When the multi-slot die coater of the present disclosure is used to manufacture an electrode of a secondary battery by applying the electrode active material slurry on a current collector while allowing the current collector to travel, there is an advantage that uniform coating is possible even under high-speed traveling or wide-width application conditions.

According to another aspect of the present disclosure, there is an effect of improving the process ability of multi-slot coating by easily adjusting positions of upper and lower discharge ports by relatively moving upper and lower die blocks according to coating process conditions.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawings.
FIG. 1 is a schematic diagram showing an example of using a slot die coater according to the conventional art.
FIG. 2 is a cross-sectional view of a dual slot die coater according to the conventional art.
FIG. 3 is a schematic cross-sectional view of a multi-slot die coater according to a non-claimed embodiment of the present disclosure.
FIG. 4 is a schematic exploded perspective view of a multi-slot die coater according to a non-claimed embodiment of the present disclosure.
FIG. 5 is a schematic cross-sectional view of a multi-slot die coater according to an embodiment of the present invention.
FIG. 6 is a diagram illustrating a case in which a positional difference between an upper discharge port and a lower discharge port occurs due to a relative movement between a lower die block and an upper die block in the multi-slot die coater of FIG. 5.
FIG. 7 shows a coating aspect according to a change in an angle of a die block in a comparative example.
FIG. 8 is a cross-sectional view of side and center parts in a width direction in the comparative example.
FIG. 9 is a graph of a slot gap in a TD according to a fastening strength in the comparative example.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

A multi-slot die coater according to an embodiment of the present disclosure may include two or more slots. Basically, the multi-slot die coater is an apparatus including a lower slot and an upper slot and coating a coating solution in a double layer on a substrate. The 'substrate' described below is a current collector and the coating solution is an 'electrode active material slurry'. Both a first coating solution and a second coating solution are electrode active material slurries, and may mean electrode active material slurries that have the same or different composition (types of an active material, a conductive material, and a binder), content (an amount of each of the active material, the conductive material, and the binder), or physical properties. The multi-slot die coater according to an embodiment of the present disclosure is optimized for electrode manufacturing in which coating is performed by simultaneously or pattern- coating is performed by alternately applying two or more types of electrode active material slurries. However, the scope of the present disclosure is not necessarily limited thereto. For example, the substrate may be a porous scaffold constituting a separation membrane, and the first coating solution and the second coating solution may be organic matters having different compositions or physical properties. That is, when thin film coating is required, any substrate, any first coating liquid, and any second coating liquid may be good.

In the multi-slot die coater, deformation or torsion of a die block is also caused by the force of a bolt used for fastening the block die and the pressure of a coating solution supplied during coating. The inventors of the present disclosure have led to the present disclosure by discovering that when the die block is manufactured at an angle that causes deformation beyond an acceptable level, an amount of deformation increases and a non-uniform coating amount is coated, and conducting research to determine an optimal angle.

The present disclosure proposes the minimum angle of the die block, in particular, the minimum angle of an intermediate die block, which cause only the acceptable level of deformation.

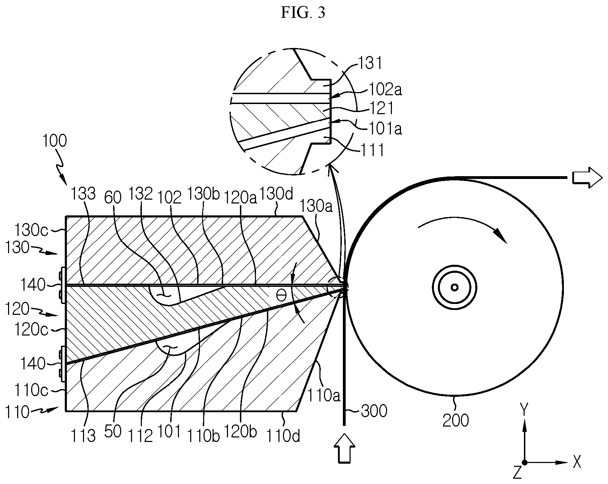

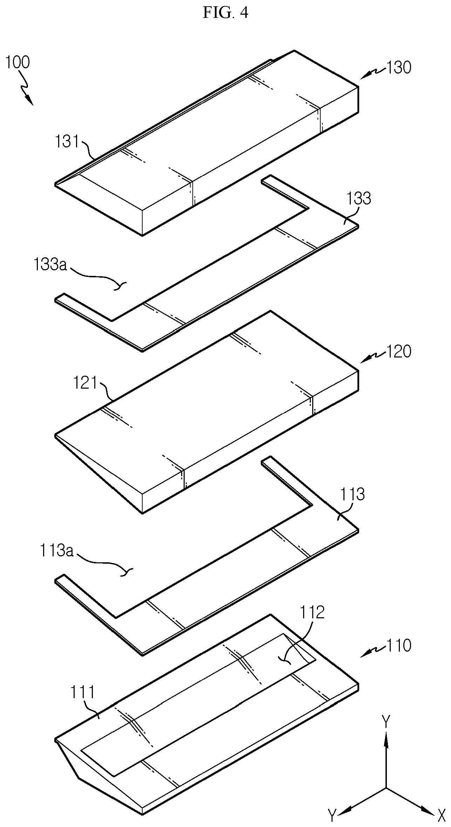

FIG. 3 is a schematic cross-sectional view of a multi-slot die coater according to an non-claimed of the present disclosure. FIG. 4 is a schematic exploded perspective view of a multi-slot die coater according to an non-claimed embodiment of the present disclosure.

A multi-slot die coater 100 according to an embodiment of the present disclosure is a dual slot die coater including a lower slot 101 and an upper slot 102 and is an apparatus capable of simultaneously or alternately coating two types of same or different coating solutions on a substrate 300 through the lower slot 101 and the upper slot 102. Referring to FIGS. 3 and 4, the multi-slot die coater 100 includes a lower die block 110, an intermediate die block 120 disposed on an upper portion of the lower die block 110, and an upper die block 130 disposed on an upper portion of the intermediate die block 120.

In FIG. 3, the multi-slot die coater 100 is installed in a substantially horizontal direction (X direction) in which an electrode active material slurry which is a coating solution is discharged (approximately: ± 5 degrees).

The intermediate die block 120 is a block located in the middle of blocks constituting the multi-slot die coater 100, and is a block disposed between the lower die block 110 and the upper die block 130 to form a dual slot. A cross section of the intermediate die block 120 of the present embodiment is a right triangle, but is not necessarily limited to such as shape. For example, the cross section may be provided as an isosceles triangle.

A first surface 120a of the intermediate die block 120 facing the upper die block 130 lies almost horizontally, and a surface 130d (that is, a surface forming an upper surface of an outer circumferential surface of the multi-slot die coater 100) opposite to a surface 130b of the upper die block 130 facing the first surface 120a also lies almost horizontally. In this way, the first surface 120a and the opposite surface 130d are almost parallel to each other. And a surface 110d (that is, a surface forming a lower surface of the outer circumferential surface of the multi-slot die coater 100) opposite to a surface 110b of the lower die block 110 facing the intermediate die block 120 also lies almost horizontally, and this surface is a bottom surface 110d (X-Z plane).

Surfaces of the lower die block 110, the intermediate die block 120, and the upper die block 130 which are opposite to a direction in which the electrode active material slurry is discharged, that is, rear surfaces 110c, 120c, and 130c, lie almost vertically (Y direction).

In a surface forming the outer circumferential surface of the multi-slot die coater 100 in the lower die block 110 and the upper die block 130 which are the outermost die blocks, the bottom surface 110d of the lower die block 110 and the upper surface 130d of the upper die block 130 manufactured to be almost vertical to the rear surfaces 110c and 130c may be used. And, the first surface 120a of the intermediate die block 120 manufactured to be almost vertical to the rear surface 120c may be used. In such die blocks 110, 120, and 130, since corners formed by surfaces are formed at right angles, there is a right angle portion in the cross section, and since a vertical or horizontal surface may be used as a reference surface, manufacturing or handling of the die blocks 110, 120, and 130 are easy and the precision thereof is guaranteed. In addition, a state in which the lower die block 110, the intermediate die block 120, and the upper die block 130 are combined has an approximately rectangular parallelepiped shape as a whole, and only a front portion from which the coating solution is discharged is inclined toward the substrate 300. This is advantageous in that a shape after assembly is approximately similar to that of a slot die coater including a single slot (e.g., 30 in FIG. 1 ) so that a slot die coater stand, etc. may be shared.

The multi-slot die coater 100 may further include two or more fixing units 140 provided on the rear surfaces 110c, 120c, and 130c thereof. The fixing units 140 are provided for fastening between the lower die block 110 and the intermediate die block 120 and for fastening between the intermediate die block 120 and the upper die block 130. A plurality of fixing units 140 may be provided in the width direction of the multi-slot die coater 100. Bolts are fastened to the fixing units 140, through which the lower die block 110, the intermediate die block 120, and the upper die block 130 are assembled with each other.

The lower die block 110, the intermediate die block 120, and the upper die block 130 are not necessarily limited to shapes of the above examples, and may be configured, for example, as vertical dies with the direction in which the electrode active material slurry is discharged as an upper direction and the rear surfaces 110c, 120c, and 130c as bottom surfaces.

The die blocks 110, 120, and 130 are made of, for example, a SUS material. Materials that are easy to process, such as SUS420J2, SUS630, SUS440C, SUS304, and SUS316L, may be used. SUS has advantages in that it is easy to process, inexpensive, has high corrosion resistance, and may be manufactured in a desired shape at low cost.

The lower die block 110 is a lowermost block among the blocks constituting the multi-slot die coater 100, and the surface 110b facing the intermediate die block 120 has an inclined shape to form an angle of approximately 20 degrees to 60 degrees with respect to the bottom surface 110d.

The lower slot 101 may be formed where the lower die block 110 and the intermediate die block 120 face each other. For example, a first spacer 113 is interposed between the lower die block 110 and the intermediate die block 120 to provide a gap therebetween, so that the lower slot 101 corresponding to a passage through which the first coating solution 50 may flow may be formed. In this case, the thickness of the first spacer 113 determines the vertical width (Y-axis direction and a slot gap) of the lower slot 101. However, conventional die blocks were vulnerable to deformation and torsion, making it difficult to maintain the slot gap.

As shown in FIG. 4, the first spacer 113 includes a first opening portion 113a in which one area is cut and may be interposed in the remaining portion except for one side in a border area of an opposite surface of each of the lower die block 110 and the intermediate die block 120. Accordingly, a lower discharge port 101a through which the first coating solution 50 may be discharged to the outside is formed only between a front end portion of the lower die block 110 and a front end portion of the intermediate die block 120. The front end portion of the lower die block 110 and the front end portion of the intermediate die block 120 are defined as a lower die lip 111 and an intermediate die lip 121, respectively. In other words, the lower discharge port 101a may be formed by making the lower die lip 111 and the intermediate die lip 121 spaced apart from each other.

For reference, the first spacer 113 functions as a gasket to prevent the first coating solution 50 from leaking into a gap between the lower die block 110 and the intermediate die block 120 except for the area where the lower discharge port 101a is formed, and thus the first spacer 113 is preferably made of a material having sealing properties.

The lower die block 110 includes a first manifold 112 having a predetermined depth on the surface 110b facing the intermediate die block 120 and communicatively connected to the lower slot 101. Although not shown in the drawings, the first manifold 112 is connected to a first coating solution supply chamber (not shown) installed outside through a supply pipe to receive the first coating solution 50. When the first coating solution 50 is filled in the first manifold 112, the flow of the first coating solution 50 is induced along the lower slot 101 and discharged to the outside through the lower discharge port 101a.

As another example, the first manifold 112 may be provided on the surface 120b of the intermediate die block 120 facing the lower die block 110.

The upper die block 130 is disposed to face the first surface 120a which is an upper surface of the intermediate die block 120 that is horizontal with respect to a bottom surface. The upper slot 102 is thus formed where the intermediate die block 120 and the upper die block 130 face to each other.

Like the lower slot 101 described above, a second spacer 133 may be interposed between the intermediate die block 120 and the upper die block 130 to provide a gap therebetween. Accordingly, the upper slot 102 corresponding to a passage through which a second coating solution 60 may flow is formed. In this case, a vertical width (Y-axis direction and a slot gap) of the upper slot 102 is determined by the second spacer 133. However, conventional die blocks were vulnerable to deformation and torsion, making it difficult to maintain the slot gap.

In addition, the second spacer 133, which also has a structure similar to that of the above-described first spacer 113, includes a second opening portion 133a in which one area is cut, and may be interposed in the remaining portion except for one side in a border area of an opposite surface of each of the intermediate die block 120 and the upper die block 130. Similarly, a circumferential direction of the second spacer 133 except for the front of the upper slot 102 is blocked, and the upper discharge port 102a is formed only between the front end portion of the intermediate die block 120 and a front end portion of the upper die block 130. The front end portion of the upper die block 130 is defined as an upper die lip 131. In other words, the upper discharge port 102a may be formed by making the intermediate die lip 121 and the upper die lip 131 spaced apart from each other.

In addition, the intermediate die block 120 includes a second manifold 132 having a predetermined depth on the surface 120a facing the upper die block 130 and communicatively connected to the upper slot 102. Although not shown in the drawings, the second manifold 132 is connected to a supply chamber of the second coating solution 60 installed outside through a supply pipe to receive the second coating solution 60. When the second coating solution 60 is supplied from the outside along the supply pipe in the shape of a pipe and filled in the second manifold 132, the flow of the second coating solution 60 is induced along the upper slot 102 communicatively connected to the second manifold 132 and discharged to the outside through the upper discharge port 102a.

As another example, the second manifold 132 may be provided on the surface 130b of the upper die block 130 facing the intermediate die block 120.

The upper slot 102 and the lower slot 101 form a certain angle, and the angle may be approximately 20 degrees to 70 degrees. The upper slot 102 and the lower slot 101 may intersect each other at one point, and the upper discharge port 102a and the lower discharge port 101a may be provided near the intersection point. Accordingly, discharge points of the first coating solution 50 and the second coating solution 60 may be concentrated approximately at one point.

According to the multi-slot die coater 100 having such a configuration, a rotatably provided coating roll 200 is disposed in front of the multi-slot die coater 100, the substrate 300 to be coated by rotating the coating roll 200 is driven, the first coating solution 50 and the second coating solution 60 are continuously contacted with the surface of the substrate 300 so that the substrate 300 may be coated in a double layer. Alternatively, supply and interruption of the first coating solution 50 and supply and interruption of the second coating solution 60 are alternately performed so that pattern-coating may be intermittently performed on the substrate 300.

Here, an angle θ between the first surface 120a of the intermediate die block 120 facing the upper die block 130 and the second surface 120b of the intermediate die block 120 facing the lower die block 110, that is, an angle of the intermediate die block 120, is set to be equal to or greater than 20 degrees.

Here, 20 degrees is the minimum angle. The angle θ may be equal to or greater than 20 degrees. When the angle θ is less than 20 degrees, the intermediate die block 120 is too thin to be very vulnerable to deformation and torsion. In the present disclosure, 20 degrees is proposed as the minimum angle to cause only an acceptable level of deformation. The intermediate die block 120 is thicker as the angle θ increases, which will be advantageous in terms of deformation and torsion.

The upper limit of the angle θ may be determined as follows. The sum of all of an angle between the surface 130b of the upper die block 130 facing the first surface 120a and the other surface 130a adjacent to the surface 130b, that is, the angle of the upper die block 130, the angle of the lower die block 110 that is an angle between the surface 110b of the lower die block 110 facing the second surface 120b and the other surface 110a adjacent to the surface 110b, and the angle of the intermediate die block 120 may be set a maximum of 180 degrees. Then, the upper limit of the angle of the intermediate die block 120 is a value obtained by subtracting the angle of the upper die block 130 and the angle of the lower die block 110 from 180 degrees. The angle of the upper die block 130 and the angle of the lower die block 110 may be determined in various ways.

However, since the angle θ also affects an angle between the lower discharge port 101a and the upper discharge port 102a, the angle θ may not be large. Therefore, in an embodiment of the present disclosure, the angle between the lower discharge port 101a and the upper discharge port 102a may be determined within a range in which an electrode active material slurry discharged from the upper discharge port 102a and an electrode active material slurry discharged from the lower discharge port 101a do not form a vortex immediately after being simultaneously discharged, and accordingly, the upper limit of the angle θ formed between the first surface 120a and the second surface 120b may be determined.

In addition, the angle θ is determined so that a deviation of each slot gap obtained by measuring a slot gap of the lower slot 101 and a slot gap of the upper slot 102 for each position in the width direction of the multi-slot die coater 100 is within 10 µm. The deviation of the slot gap may indicate a difference between a largest slot gap and a smallest slot gap. Usually, the slot gap is the largest at the center in the width direction, and the slot gap is smaller toward the side in the width direction. When the deviation of each slot gap is greater than 10 µm, it is determined that loading in the width direction is non-uniform. Since the non-uniform loading in the width direction leads to a non-uniform capacity when an electrode is manufactured as a secondary battery in the future, it is not preferable in terms of the characteristics of the secondary battery. Accordingly, the acceptable level is managed so that the deviation of the slot gap is within 10 µm on the basis that the deviation of the slot gap is 10 µm. 20 degrees that is the minimum value of the angle θ may be determined in consideration of the deviation of the slot gap.

The lower limit of the angle θ is 20 degrees. As mentioned above, the upper limit of the angle θ may be determined in the range equal to or less than 180 degrees in consideration of even the angle of the upper die block 130 and the lower die block 110 considering the angle of the two discharge ports 101a and 102a. **In** particular, considering the case where the lower slot 101 and the upper slot 102 form the angle of 20 degrees to 70 degrees as in the present disclosure, the upper limit of the angle θ is 70 degrees. Accordingly, preferably, the angle θ ranges from 20 degrees to 70 degrees.

The angle θ is an angle between the first surface 120a and the second surface 120b in the intermediate die block 120, and the present disclosure proposes to manage the minimum angle of the angle θ, but the angle of the upper die block 130 may be at least 20 degrees. Similarly, the angle of the lower die block 110 may be at least 20 degrees. Through this, the slot gap of the lower slot 101 formed between the lower die block 110 and the intermediate die block 120 and the upper slot 102 formed between the intermediate die block 120 and the upper die block 130 may be managed within the acceptable level of deformation.

As described above, according to the present disclosure, the angle θ between surfaces where the die block, in particular, the intermediate die block 120, faces the other die blocks 110 and 130 is proposed, so as to improve the deformation or torsion of the die block which is structurally vulnerable due to a thin thickness. The present disclosure proposes the minimum angle of the die block, in particular, the minimum angle θ of the intermediate die block 120, which causes only the acceptable level of deformation, as 20 degrees. According to the present disclosure, even considering that the die block is deformed by the force of the fastening bolt and the pressure of the discharged electrode active material slurry, there is an effect of uniformly controlling the coating amount by maintaining a uniform (±2%) slot gap.

When a bolt fastening pressure is lowered by reducing the bolt force to minimize the deformation of the die block, the electrode active material slurry may leak from a coupling surface between die blocks. Since the die block of the present disclosure has an angle that minimizes deformation, the die block may be used without leakage of the electrode active material slurry by sufficiently applying the bolt force.

Conventionally, a slot gap was changed even by the pressure of the electrode active material slurry, and in particular, there was a big difference in the slot gap between the side and the center in the MD. Since the die block of the present disclosure has the angle that minimizes deformation, even if deformation occurs due to the pressure of the supplied electrode active material slurry, the deformation occurs within the acceptable level, and thus it is possible to obtain a coating product of uniform quality, in particular, an electrode for a secondary battery by using the multi-slot die coater with the uniform slot gap.

As described above, according to the present disclosure, it is possible to limit the minimum acceptable range of deformation and torsion by controlling the angle of the die block. Even if the discharge pressure of the electrode active material slurry increases, the effect of maintaining the once adjusted slot gap is excellent. This has the effect of securing coating process ability and securing reproducibility.

Using such a multi-slot die coater, it is possible to uniformly form a coating layer, in particular, an electrode active material layer, to a desired thickness, and preferably, simultaneous coating of two or more types of electrode active material slurries is possible, and thus there are effects that both performance and productivity are excellent.

Meanwhile, in the present embodiment, the case of applying the coating solution in two layers or the case of performing pattern-coating by alternately supplying the coating solution has been described as an example, but it will be understood without separate explanation that it is also applied to the case where three or more layers are simultaneously applied by providing three or more slots. It will be understood without detailed explanation that four or more die blocks are required to provide three or more slots.

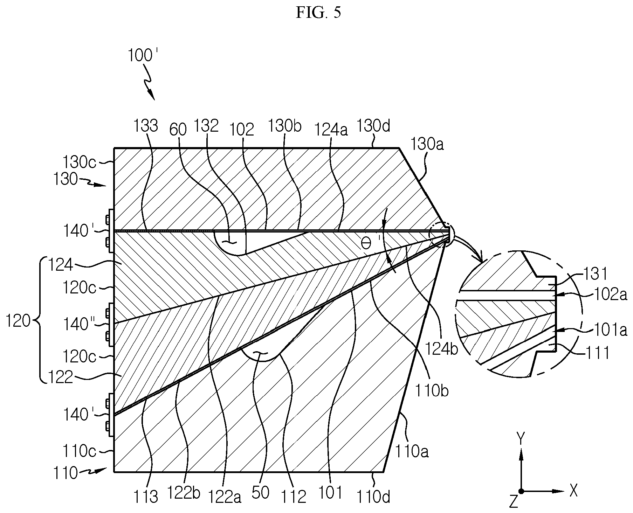

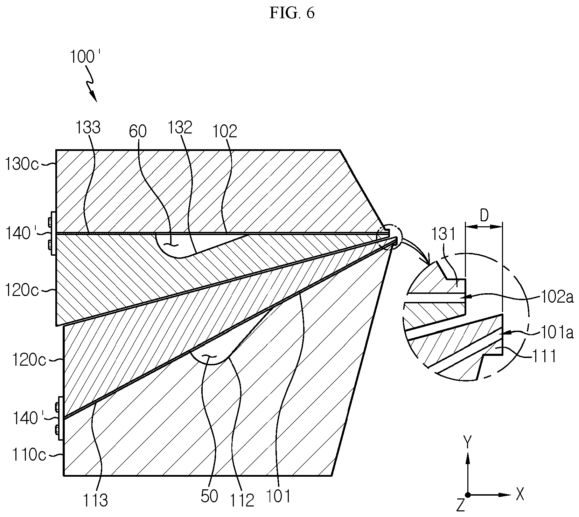

Next, the embodiment of the present invention will be described with reference to FIGS. 5 and 6. The same reference numerals as in the above-described embodiment denote the same members, and redundant descriptions of the same members will be omitted, and differences from the above-described embodiment will be mainly described.

In the above-described non-claimed embodiment, the intermediate die block 120 includes one block, so that relative positions of the upper discharge port 102a and the lower discharge port 101a may not be variably adjusted, but according to another embodiment of the present disclosure, the relative positions of the upper discharge port 102a and the lower discharge port 101a may be easily adjusted.

To this end, in a multi-slot die coater 100' according to the embodiment of the invention, the intermediate die block 120 includes a first intermediate die block 122 and a second intermediate die block 124, and the first intermediate die block 122 and the second intermediate die block 124 face-to-face contact with each other up and down, but slide along a contact surface to be movable relative to each other. And, the first intermediate die block 122 is fixedly coupled to the lower die block 110 by bolt coupling, etc., and the second intermediate die block 124 is fixedly coupled to the upper die block 130 by bolt coupling, etc. Accordingly, the first intermediate die block 122 and the lower die block 110 may move integrally, and the second intermediate die block 124 and the upper die block 130 may move integrally.

That is, like the multi-slot die coater 100, the multi-slot die coater 100' further includes two or more first fixing units 140' provided on the rear surfaces 110c, 120c, and 130c thereof. The first fixing units 140' are provided for fastening the lower die block 110 and the first intermediate die block 122 and for fastening the second intermediate die block 124 and the upper die block 130. A second fixing unit 140" fastens the first intermediate die block 122 and the second intermediate die block 124, and serves to fasten the lower die block 110 and the upper die block 130. The second fixing unit 140" is installed at a certain level of assembly tolerance (a range of about 300 µm to about 500 µm) in consideration of the fact that the first intermediate die block 122 and the second intermediate die block 124 must be relatively movable. That is, the second fixing unit 140" fixes the first intermediate die block 122 and the second intermediate die block 124, so as to prevent a movement above a certain level therebetween by allowing the first intermediate die block 122 and the second intermediate die block 124 to move forward or backward to be slidable and fixed, and allows a fine movement due to the assembly tolerance.

In the multi-slot die coater 100', if necessary, the two discharge ports 101a and 102a may be spaced apart from each other in a horizontal direction to be arranged back and forth. That is, as shown in FIGS. 5 and 6, a separate apparatus for adjusting the shape of the multi-slot die coater 100' is used, or an operator may make the relative movement of the lower die block 110 and the upper die block 130 by hand (the second fixing unit 140" is omitted in FIG. 6 for convenience of illustration).

For example, in a state where the lower die block 110 does not move and is left as it is, a step between the lower discharge port 101a and the upper discharge port 102a may be formed by moving the upper die block 130 along a sliding surface by a certain distance D backward or forward opposite to a discharge direction of the coating solutions 50 and 60. Here, the sliding surface means an opposite surface of the first intermediate die block 122 and the second intermediate die block 124.

The width D of the step formed as described above may be determined within the range of approximately several hundred micrometers to several millimeters, which may be determined according to the physical properties and viscosity of the first coating solution 50 and the second coating solution 60 formed on the substrate 300, or a desired thickness for each layer on the substrate 300. For example, as the thickness of a coating layer to be formed on the substrate 300 increases, a numerical value of the width D of the step may increase.

In addition, as the lower discharge port 101a and the upper discharge port 102a are arranged at positions spaced apart from each other in the horizontal direction, there is no concern that the second coating solution 60 discharged from the upper discharge port 102a flows into the lower discharge port 101a or the first coating solution 50 discharged from the lower discharge port 101a flows into the upper discharge port 102a.

That is, there is no concern that the coating solution discharged through the lower discharge port 101a or the upper discharge port 102a is blocked by a surface forming the step formed between the lower discharge port 101a and the upper discharge port 102a and flows into the other discharge port, whereby a more smooth multi-layer active material coating process may proceed.

The multi-slot die coater 100' according to another embodiment of the present disclosure as described above may be adjusted simply by the sliding movement of the lower die block 110 and/or the upper die block 130, in a case where the relative position between the lower discharge port 101a and the upper discharge port 102a needs to be changed, and there is no need to disassemble and reassemble each of the die blocks 110, 120, and 130, and thus process ability may be greatly improved.

In the multi-slot die coater 100' including four die blocks, the minimum angle between the first intermediate die block 122 and the second intermediate die block 124 is also proposed.

In particular, an angle θ' between a surface 124a of the second intermediate die block 124 facing the upper die block 130 and a surface 124b of the second intermediate die block 124 facing the first intermediate die block 122 is set to be equal to or greater than14 degrees.

In the multi-slot die coater 100' of the present embodiment, since the number of die blocks increases by one compared to the multi-slot die coater 100 of the above-described embodiment, the thickness of the die block is thinner when the overall volume is maintained. The angle θ' of the second intermediate die block 124 is at least 14 degrees. The angle θ' may be equal to or greater than 14 degrees. When the angle θ' is less than 14 degrees, the second intermediate die block 124 is too thin to be very vulnerable to deformation and torsion. In the embodiment of the present invention, 14 degrees is proposed as a minimum angle to cause only an acceptable level of deformation. Since the second intermediate die block 124 is thicker as the angle θ' increases, it will be advantageous in terms of deformation and torsion. However, as described above, since the angle θ' also affects the angle between the lower discharge port 101a and the upper discharge port 102a, the angle θ' may not be made large. Therefore, even here, the angle between the lower discharge port 101a and the upper discharge port 102a may be determined within a range in which an electrode active material slurry discharged from the upper discharge port 102a and an electrode active material slurry discharged from the lower discharge port 101a do not form a vortex immediately after being simultaneously discharged, and accordingly, the upper limit of the angle θ' may be determined.

In addition, as described above, the angle θ' is determined so that a deviation of each slot gap obtained by measuring a slot gap of the lower slot 101 and a slot gap of the upper slot 102 for each position in the width direction of the multi-slot die coater 100' is within 10 µm. When the deviation of each slot gap is greater than 10 µm, it is determined that loading in the width direction is non-uniform. 14 degrees that is the minimum angle may be determined in consideration of the deviation of the slot gap in the multi-slot die coater 100' including four die blocks as described above.

The angle θ' is an angle formed between the surfaces where the second intermediate die block 124 faces the other adjacent die blocks 130 and 122, and the present disclosure proposes to manage the minimum angle of the angle θ'. However, the angle of the upper die block 130 which is an angle between the surface 130b of the upper die block 130 facing the surface 124a of the second intermediate die block 124 and the other surface 130a adjacent to the surface 130b is also at least 14 degrees. Similarly, the angle of the first intermediate die block 122 which is an angle between the surface 122a of the first intermediate die block 122 facing the second intermediate die block 124 and the surface 122b facing the lower die block 110 is also at least 14 degrees. Also, the angle of the lower die block 110 which is an angle between the surface 110b of the lower die block 110 facing the first intermediate die block 122 and the other surface 110a adjacent to the surface 110b is at least 14 degrees. Through this, a slot gap of the lower slot 101 formed between the lower die block 110 and the intermediate die block 120 and the upper slot 102 formed between the intermediate die block 120 and the upper die block 130 may be managed within the acceptable level of deformation.

The lower limit of the angle θ' is 14 degrees. As mentioned above, the upper limit of the angle θ' may be determined in the range equal to or less than 180 degrees in consideration of even the angle of the upper die block 130, the first intermediate die block 122, and the lower die block 110 considering the angle of the two discharge ports 101a and 102a.

In particular, when the angle of the upper discharge port 102a is approximately 90 degrees as in the example shown in the drawings, the lower limit may be determined as follows. For example, assuming that the upper slot 102 has an angle of 90 degrees with respect to the surface of the substrate 300 in the multi-slot die coater 100', the angle (the angle of the second intermediate die block 124 + the angle of the first intermediate die block 122 + the angle of the lower die block 110) between the surface 124a of the second intermediate die block 124 and the face 110a of the lower die block 110 is 90 degrees to the maximum (a value obtained by subtracting 90 degrees from 180 degrees). If the minimum angle of the first intermediate die block 122 is 14 degrees and even the minimum angle of the lower die block 110 is 14 degrees, the maximum angle of the second intermediate die block 124 is 62 degrees. Accordingly, when the multi-slot die coater 100' is used so that the discharge direction of the upper slot 102 has an angle of 90 degrees with respect to the surface of the substrate 300, the angle θ' of the second intermediate die block 124 is managed in the range equal to or greater than 14 degrees and equal to or less than 62 degrees. Accordingly, assuming that the upper slot 102 has the angle of 90 degrees with respect to the surface of the substrate 300 in the multi-slot die coater 100', the angle θ' is in the range of 14 degrees to 62 degrees.

As another example, considering only the case where the upper slot 102 and the lower slot 101 have an angle of maximum 70 degrees, the maximum angle of the sum of the angle of the second intermediate die block 124 and the angle of the first intermediate die block 122 are may be 70 degrees. In such a case, if the lower limit of each of the angle of the second intermediate die block 124 and the angle of the first intermediate die block 122 is 14 degrees, 56 degrees obtained by subtracting 14 degrees from 70 degrees is the lower limit of the angle θ'. Accordingly, in this case, preferably, the angle θ' ranges from 14 degrees to 56 degrees.

As such, although the lower limit of the angle θ' is fixed to 14 degrees, the upper limit of the angle θ' may be changed while satisfying other conditions such as the angle of the upper slot 102 or the angle between the upper slot 102 and the lower slot 101.

### Consideration of upper slot angle and lower slot angle

Hereinafter, the dual slot die coater according to the conventional art is described as a comparative example, and the effect of the dual slot die coater according to an embodiment of the present disclosure is described.

As mentioned above, the original dual slot die coater is structurally vulnerable to deformation and torsion due to a thin thickness of each die block. When the size of the die block is vaguely increased (change in the angle), the discharge direction is changed, which causes a problem in deterioration of coating process ability.

In the conventional dual slot die coater, in order to confirm the influence of a slot inclination due to the change in the angle of the die block on the electrode active material slurry coating stability, the upper slot and the lower slot were analyzed by inclining each of the upper slot and the lower slot by 30 degrees in a direction away from the intermediate die block.

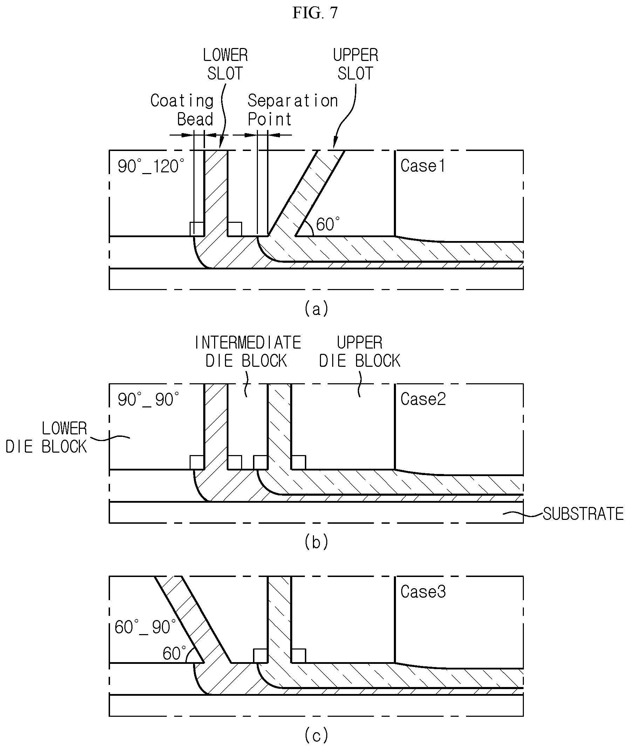

FIG. 7 shows a coating aspect according to a change in an angle of a die block in a comparative example.

Case 1 is that the upper slot has an angle of 120 degrees with respect to a surface of a substrate and the lower slot has an angle of 90 degrees with respect to the surface of the substrate by inclining the upper slot by 30 degrees in a direction away from the intermediate die block, Case 2 is that all slots are upright with respect to the surface of the substrate so that each of the upper slot and the lower slot has an angle of 90 degrees with respect to the surface of the substrate, and Case 3 is that the upper slot has an angle of 90 degrees with respect to the surface of the substrate and the lower slot has an angle of 60 degrees with respect to the surface of the substrate by inclining the lower slot by 30 degrees in a direction away from the intermediate die block. A state of each of electrode active material slurry coating layers is as shown in FIG. 7. Positions of a coating bead and a separation point are shown in FIG. 7. FIG. 7 shows the coating aspect according to the change in the angle of the die block in a comparative example. In FIG. 7, (a), (b), and (c) represent case 1, case 2, and case 3, respectively.

The positions of the coating bead and the separation point for each case are summarized in Table 1.

**[Table 1]**

| | Angle of lower slot | Angle of upper slot | Position of coating bead (µm) | Position of separation point (µm) |
|---|---|---|---|---|
| Case 1 | 90 degrees | 120 degrees | 165 | 102 |
| Case 2 | 90 degrees | 90 degrees | 115 | 62 |
| Case 3 | 60 degrees | 90 degrees | 49 | 61 |

Coating stability may be determined by the positions of the coating bead and the separation point.

As a result of changing the angle of the upper slot and the angle of the lower slot as described above, as to the coating stability, case 2 was the same as or better than case 3 and case 1 was the worst (case 2 ≥ case 3 > case 1). Compared to case 2 in which all slots are upright, case 1 and case 2 relate to a V-shaped solution supply method by inkling either slot. Such a solution supply method has a problem in that it is difficult to form a double layer because intermixing occurs due to vortex formation in a region where upper and lower slurries meet. When the size of the die block is increased and the angle is changed as described above, the discharge direction is changed, which causes deterioration of coating process ability.

As to deformation vulnerability, case 1 and case 3 were similar, and were very vulnerable compared to case 2 (case 1 = case 3 >> case 2). That is, when the angle is changed as in case 1 and case 3, the intermediate die block is too thin to be vulnerable. That is, even if deformation and torsion are improved by increasing thicknesses of the upper/lower die blocks located outside among the three die blocks, it is still difficult to compensate for the deformation of the structurally most vulnerable intermediate die block. Therefore, it may be seen that it is difficult to block deformation and torsion through a simple change in the angle. In the present disclosure, a minimum acceptable range of deformation and distortion is limited by controlling the angle of the die block. Conventionally, neither an understanding of the angle of the die block nor a clear standard has been suggested.

### Confirmation of problem of deviation of slot gap of conventional dual slot die coater

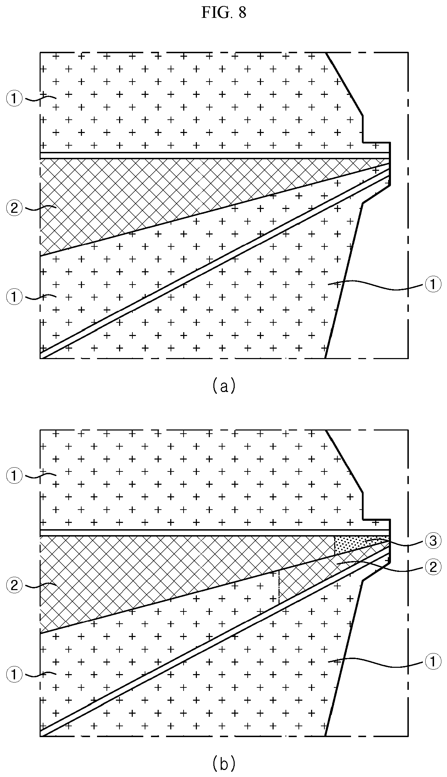

FIG. 8 is a cross-sectional view of side and center parts in a width direction in case 3 among the comparative examples.

FIG. 8(a) and 8(b) show cross-sections of a dual slot die coater of the side and the center parts, respectively. In the drawings, a degree of deformation is indicated for each position in the die block. The degree of deformation is ① < ② < ③.

Referring to FIG. 8(a), it may be seen that the degree of deformation of a portion corresponding to the second intermediate die block in the side part is slightly deformed to ②. Referring to FIG. 8(b), it may be seen that the degree of deformation reaches ③ near a lip of the second intermediate die block as the deformation further deepens in the center part. Also, it may be seen in the center part that deformation of the degree of deformation ② occurred in a portion corresponding to near a lip of the first intermediate die block. As such, since the deformation of the die block is more severe in the center part, it may be confirmed that a slot gap of the upper slot in the center part is significantly different from a slot gap of the upper slot in the side part. In addition, it may be seen that since the deformation of the first intermediate die block is small in the side part, a change in the slot gap of the lower slot is small compared to a change in the slot gap of the upper slot, whereas since the first intermediate die block is also deformed in the center part, the change in the slot gap of the lower slot also reaches a level not to be ignored.

As described above, in the conventional dual slot die coater, a difference in the slot gap occurs in the side part and the center part in the width direction, which causes a deviation of the slot gap, and it was difficult to reduce the deviation of the slot gap. However, in the present disclosure, the deviation of the slot gap may be managed within an acceptable level by limiting the minimum angle of the second intermediate die block.

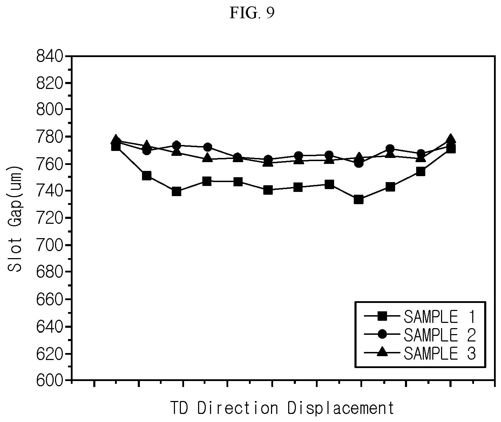

In the conventional dual slot die coater, slot gaps (the size of a discharge port between the upper die block and the intermediate die block, that is, a gap of the upper slot) according to respective bolt fastening strengths when assembling the upper die block and the intermediate die block are measured in the TD which is the width direction of the die block perpendicular to a traveling direction and are summarized in FIG. 9 and Table 2. FIG. 9 is a graph of a change in the slot gap in the TD according to the fastening strength in the comparative example. In the graph, the X-axis represents a TD displacement measured from one end of the die block, and the Y-axis represents the size of the slot gap.

**[Table 2]**

| | Bolt Torque (N) | Slot gap | | |
|---|---|---|---|---|
| | | Maximum (µm) | Minimum (µm) | Maximum-Minimum (µm) |
| Sample 1 | 350 | 773 | 734 | 39 |
| Sample 2 | 150 | 777 | 760 | 13 |
| Sample 3 | 200 | 778 | 761 | 12 |

Upon assembling the upper die block and the intermediate die block as in sample 1, when the bolt torque of 350N is used, a maximum-minimum difference of the slot gap is 39 µm. When the fastening strength is changed to 150N and 200N in the order of samples 2 and 3, the maximum-minimum difference is reduced to 13 µm and 12 µm. As described above, in the related art, the change in the slot gap is easy according to the fastening strength. Conventionally, even if the fastening strength was set at 200N and tightly managed to assemble the upper die block and the intermediate die block, the maximum-minimum difference of 12 µm had to be endured. However, in an embodiment of the present disclosure, the angle (θ or θ') of the die block is determined so that the deviation of the slot gap of the multi-slot die coater is within 10 µm. When the deviation of each slot gap is greater than 10 µm, it is determined that loading in the width direction is non-uniform. Since the non-uniform loading in the width direction leads to a non-uniform capacity when an electrode is manufactured as a secondary battery in the future, it is not preferable due to the characteristics of the secondary battery. Accordingly, in the embodiment of the present disclosure, an acceptable level is managed so that the deviation of the slot gap is within 10 µm on the basis that the deviation of the slot gap is 10 µm. 20 degrees which is the minimum angle of the intermediate die block when there are three die blocks and 14 degrees which is the minimum angle of the second intermediate die block when there are four die blocks are determined in consideration of the deviation of the slot gap.

### Confirmation of effect of lower limit of angle of second intermediate die block in multi-slot die coater including 4 die blocks

In the same structure as the multi-slot die coater 100' described with reference to FIG. 5, with respect to cases where the angle of the second intermediate die block is 10 degrees (Comparative Example) and 14 degrees (Embodiment), the deviation of the slot gap of the upper slot and the deviation of the slot gap of the lower slot were measured and shown in Table 3 below. Here, a target value of the slot gap was set to 1 mm, and degrees to which the slot gap increased in the center compared to the side in the width direction according to various discharge pressures of a slurry were measured and summarized.

**[Table 3]**

| | deviation of slot gap of upper slot (µm) | | deviation of slot gap of lower slot (µm) | |
|---|---|---|---|---|
| | Angle | | | |
| Pressure (kPa) | 10 degrees | 14 degrees | 10 degrees | 14 degrees |
| 34 | 5.2 | 3.4 | 4.7 | 3.1 |
| 54 | 8.1 | 5.3 | 7.2 | 4.8 |
| 74 | 10.7 | 7.3 | 9.4 | 6.6 |
| 94 | 13.3 | 9.7 | 11.6 | 8.8 |

In an embodiment of the present disclosure, the acceptable level is on the basis that the deviation of the slot gap of 10 µm. In Table 3, until the pressure is 34 or 54 kPa, even if the angle of the second intermediate die block is 10 degrees, there is no problem because the deviation is within 10 µm. The discharge pressure of the slurry may vary depending on the coating conditions (a loading amount and a coating speed), and in general, a pressure equal to or less than 100 kPa is used in a secondary battery. From 74 kPa which is close to 100 kPa, when the angle of the second intermediate die block is 10 degrees, the deviation of the slot gap of the upper slot exceeds the acceptable level. In particular, at 94 kPa which is very close to 100 kPa, when the angle of the second intermediate die block is 10 degrees, both the deviation of the slot gap of the upper slot and the deviation of the slot gap of the lower slot greatly are beyond 10 µm. In contrast, when the angle of the second intermediate die block is 14 degrees, both the deviation of the slot gap of the upper slot and the deviation of the slot gap of the lower slot are within 10 µm. Therefore, the minimum value of the angle of the second intermediate die block must be 14 degrees so that the slot gap may be managed within an acceptable level of deformation.

### Confirmation of Angle Range Effect of Intermediate Die Block in Multi-Slot Die Coater including 3 Die Blocks

As seen in 'Consideration of angle of upper slot and angle of lower slot' above, as in case 1, when the upper slot is inclined in a direction away from the intermediate die block, that is, when the angle between the upper slot and the surface of the substrate is greater than 90 degrees, it is not suitable for forming a vortex when the electrode active material slurry (an upper layer slurry) discharged from the upper slot and the electrode active material slurry (a lower layer slurry) discharged from the lower slot meet. Therefore, in the same structure as the multi-slot die coater 100 described with reference to FIG. 3, with respect to the cases where the angle between the upper slot 102 and the surface of the substrate 300, that is, the angle of the upper discharge port 102a is fixed to 90 degrees, and the angle of the intermediate die block 120 is set to 15 degrees (Comparative Example 1-1), 20 degrees (Embodiment 1-1), 70 degrees (Embodiment 1-2), and 75 degrees (Comparative Example 1-2), deviations of the slot gap of the lower slot were measured and shown in Table 4 below. In the respective cases, the angles of the lower discharge port 101a are 75 degrees, 70 degrees, 20 degrees, and 15 degrees. Here, the target value of the slot gap was set to 1 mm, the discharge pressure of the slurry was 100 kPa, and a degree to which the slot gap increased in the center compared to the side in the width direction was measured and summarized. It was assumed that the multi-slot die coater used in the simulation had an overall width of 1500 cm in the TD, a total height of 190 cm from the upper surface of the upper die block to the lower surface of the lower die block, and a front and back length of 190 cm in the MD. It was assumed that the width of a manifold including the slurry in the TD was 1390 cm, and the length of a land portion which is the distance from the end of the manifold to the discharge port was 50 cm. It was assumed that the lower die block and the intermediate die block are fastened with 14 M14 bolts, and the intermediate die block and the upper die block are also fastened with 14 M14 bolts.

**[Table 4]**

| | Comparative Example 1-1 | Embodiment 1-1 | Embodiment 1-2 | Comparative Example 1-2 |
|---|---|---|---|---|
| Angle of upper discharge port | 90 degrees | 90 degrees | 90 degrees | 90 degrees |
| Angle of intermediate die block | 15 degrees | 20 degrees | 70 degrees | 75 degrees |
| Angle of lower discharge port | 75 degrees | 70 degrees | 20 degrees | 15 degrees |
| Deviation of slot gap of Lower slot (µm) | 12.1 | 8.8 | 8 | 11.7 |

In an embodiment of the present disclosure, the acceptable level is on the basis that the deviation of the slot gap is 10 µm. In Comparative Example 1-1 and Comparative Example 1-2 of Table 4, the deviation of the slot gap are 12.1 µm and 11.7 µm, respectively, which are beyond 10 µm. However, as proposed in the present disclosure, when the angle of the intermediate die block is set to 20 degrees (Embodiment 1-1) or 70 degrees (Embodiment 1-2), the deviation of the slot gap are 8.8 µm and 8 µm, respectively, which are within 10 µm. Therefore, when the angle between the upper slot 102 and the surface of the substrate 300, that is, the angle of the upper discharge port 102a is fixed to 90 degrees, the angle of the intermediate die block 120 must be between at least 20 degrees and 70 degrees so that the slot gap may be managed within an acceptance level of deformation.

### Confirmation of Angle Range Effect of Intermediate Die Block in Multi-Slot Die Coater including 4 Die Blocks

In the same structure as the multi-slot die coater 100' described with reference to FIG. 5, with respect to the cases where the angle between the upper slot 102 and the surface of the substrate 300, that is, the angle of the upper discharge port 102a is fixed to 90 degrees, and each of the angle of the intermediate die block 122 and the angle of the second intermediate die block 124 is set to 10 degrees (Comparative Example 2-1), and 14 degrees (Embodiment 2-1), the angle of the second intermediate die block 124 is set to 62 degrees and the angle of the first intermediate die block 122 is set to 62 degrees (Embodiment 2-2), the angle of the second intermediate die block 124 is set to 70 degrees and the angle of the first intermediate die block 122 is set to 10 degrees (Comparative Example 2-2), deviations of the slot gap of the lower slot were measured and shown in Table 5 below. Here, the target value of the slot gap was set to 1 mm, the discharge pressure of the slurry was 94 kPa, and a degree to which the slot gap increased in the center compared to the side in the width direction was measured and summarized. It was assumed that the multi-slot die coater used in the simulation had an overall width of 1500 cm in the MD, a total height of 190 cm from the upper surface of the upper die block to the lower surface of the lower die block, and a front and back length of 190 cm in the MD. It was assumed that the width of a manifold including the slurry in the MD was 1390 cm, and the length of a land portion which is the distance from the end of the manifold to the discharge port was 50 cm. It was assumed that the lower die block and the first intermediate die block are fastened with 14 M14 bolts, and the second intermediate die block and the upper die block are also fastened with 14 M14 bolts.

**[Table 5]**

| | Comparative Example 2-1 | Embodiment 2-1 | Embodiment 2-2 | Comparative Example 2-2 |
|---|---|---|---|---|
| Angle of upper discharge port | 90 degrees | 90 degrees | 90 degrees | 90 degrees |
| Angle of second intermediate die block | 10 degrees | 14 degrees | 62 degrees | 70 degrees |
| Angle of first intermediate die block | 10 degrees | 14 degrees | 14degrees | 10 degrees |
| Angle of lower discharge port | 70 degrees | 62 degrees | 14 degrees | 10 degrees |
| Deviation of slot gap of Lower slot (µm) | 11.6 | 8.8 | 9.3 | 13.5 |

In an embodiment of the present disclosure, the acceptable level is on the basis that the deviation of the slot gap is 10 µm. In Comparative Example 2-1 and Comparative Example 2-2 of Table 5, the deviation of the slot gap are 11.6 µm and 13.5 µm, respectively, which are beyond 10 µm. However, as proposed in the present disclosure, when each of the angle of the intermediate die block 122 and the angle of the second intermediate die block 124 is set to 14 degrees (Embodiment 2-1), and the angle of the second intermediate die block is set to 62 degrees (Embodiment 2-2), the deviation of the slot gap are 8.8 µm and 9.3 µm, respectively, which are within 10 µm. Therefore, when the angle between the upper slot 102 and the surface of the substrate 300 is fixed to 90 degrees, the angle of the second intermediate die block 124 must be between at least 14 degrees and 62 degrees so that the slot gap may be managed within an acceptance level of deformation.

The present disclosure has been described in detail. However, it should be understood that the detailed description and specific examples, while indicating preferred embodiments of the disclosure, are given by way of illustration only.

Meanwhile, although terms indicating directions such as up, down, left, and right are used in the present specification, these terms are only for convenience of description, and it is apparent to those skilled in the art that these terms may vary depending on a position of a target object or a position of an observer.

## Claims

1. A multi-slot die coater (100') comprising a lower slot (101) and an upper slot (102), the multi-slot die coater (100') comprising:
a lower die block (110);
an intermediate die block (120) disposed on the lower die block (110) to form the lower slot (101) therebetween; and
an upper die block (130) disposed on the intermediate die block (120) to form the upper slot (102) therebetween,
wherein the intermediate die block (120) comprises a first intermediate die block (122) and a second intermediate die block (124) in face-to-face contact with each other up and down and sliding along a contact surface to be movable relative to each other,
an angle formed by a surface (124a) of the second intermediate die block (124) facing the upper die block (130) and a surface (124b) of the second intermediate die block (124) facing the first intermediate die block (122) is equal to or greater than 14 degrees and equal to or less than 62 degrees, and
wherein an angle formed by a surface (122b) of the first intermediate die block (122) facing the lower die block (110) and a surface (122a) of the first intermediate die block (122) facing the second intermediate die block (124) is equal to or greater than 14 degrees and equal to or less than 62 degrees,
wherein the surface (124b) of the second intermediate die block (124) faces the surface (122a) of the first intermediate die block (122).

2. The multi-slot die coater (100') of claim 1, wherein an angle formed by the first surface (120a) of the intermediate die block (120) facing the upper die block (130) and the second surface (120b) of the intermediate die block (120) facing the lower die block (110) is equal to or less than 70 degrees.

3. The multi-slot die coater (100') of claim 1, wherein when an angle formed by a surface (130b) of the upper die block (130) facing the first surface (120a) and another surface (130a) adjacent to the surface (130b) is referred to as an angle of the upper die block (130), an angle formed by a surface (110b) of the lower die block (110) facing the second surface (120b) and another surface (110a) adjacent to the surface (110b) is referred to as an angle of the lower die block (110), and the angle formed by the first surface (120a) of the intermediate die block (120) facing the upper die block (130) and the second surface (120b) of the intermediate die block facing (120) the lower die block (110) is referred to as an angle of the intermediate die block (120), the angle of the upper die block (130), the angle of the intermediate die block (120), and the angle of the lower die block (110) all add up to a maximum of 180 degrees.

4. The multi-slot die coater (100') of claim 1, wherein the lower die block (110), the intermediate die block (120), and the upper die block (130) respectively comprise a lower die lip (111), an intermediate die lip (121), and an upper die lip (131) forming front end portions thereof, a lower discharge port (101a) communicatively connected to the lower slot (101) is formed between the lower die lip (111) and the intermediate die lip (121), and an upper discharge port (102a) communicatively connected to the upper slot (102) is formed between the intermediate die lip (121) and the upper die lip (131),
the multi-slot die coater (100) is configured to extrude and apply an electrode active material slurry on a surface of a continuously traveling substrate (300) through at least one of the lower slot (101) and the upper slot (102), and
the angle formed by the first surface (120a) and the second surface (120b) is determined so that an angle formed by the lower discharge port (101a) and the upper discharge port (102a) is within a range in which an electrode active material slurry discharged from the upper discharge port (102a) and an electrode active material slurry discharged from the lower discharge port (101a) do not form a vortex immediately after being simultaneously discharged.

5. The multi-slot die coater (100') of claim 1, wherein the multi-slot die coater (100) is configured to extrude and apply an electrode active material slurry on a surface of a continuously traveling substrate (300) through at least one of the lower slot (101) and the upper slot (102), a direction in which the electrode active material slurry is discharged lies almost horizontally such that the multi-slot die coater (100) is installed , the first surface (120a) lies almost horizontally and an opposite side of the upper die block (130) facing the first surface (120a) also lies almost horizontally, and surfaces of the lower die block (110), the intermediate die block (120), and the upper die block (130) opposite to the direction in which the electrode active material slurry is discharged lie almost vertically.

6. The multi-slot die coater (100') of claim 1, wherein the first intermediate die block (122) is fixedly coupled to the lower die block (110), and the second intermediate die block (124) is fixedly coupled to the upper die block (130).

7. The multi-slot die coater (100') of claim 1, wherein the lower die block (110), the intermediate die block (120), and the upper die block (130) respectively comprise a lower die lip (111), an intermediate die lip (121), and an upper die lip (131) forming front end portions thereof, a lower discharge port (101a) communicatively connected to the lower slot (101) is formed between the lower die lip (111) and the intermediate die lip (121), an upper discharge port (102a) communicatively connected to the upper slot (102) is formed between the intermediate die lip (121) and the upper die lip (131), and a predetermined step is formed between the lower discharge port (101a) and the upper discharge port (102a).

8. The multi-slot die coater (100') of claim 1, further comprising:
a first spacer (113) interposed between the lower die block (110) and the intermediate die block (120) to adjust a width of the lower slot (101), and
a second spacer interposed between the intermediate die block (120) and the upper die block (130) to adjust a width of the upper slot (102).

9. The multi-slot die coater (100') of claim 1, wherein the lower die block (110) comprises a first manifold configured to accommodate a first coating solution (50) and communicatively connected to the lower slot (101), and the intermediate die block (120) comprises a second manifold (132) configured to accommodate a second coating solution (60) and communicatively connected to the upper slot (102).

## Patentansprüche

1. Mehrschlitzdüsenbeschichter (100') umfassend einen unteren Schlitz (101) und einen oberen Schlitz (102), wobei der Mehrschlitzdüsenbeschichter (100') umfasst:
einen unteren Düsenblock (110);
einen intermediären Düsenblock (120) der auf dem unteren Düsenblock (110) angeordnet ist um den unteren Schlitz (101) dazwischen zu bilden; und
einen oberen Düsenblock (130), der auf dem intermediären Düsenblock (120) angeordnet ist, um den oberen Schlitz (102) dazwischen zu bilden,
wobei der intermediäre Düsenblock (120) einen ersten intermediären Düsenblock (122) und einen zweiten intermediären Düsenblock (124) umfasst die in Stirnflächenkontakt miteinander nach oben und unten stehen und entlang einer Kontaktfläche gleiten um relativ zueinander beweglich zu sein,
ein Winkel der durch eine Fläche (124a) des zweiten intermediären Düsenblocks (124) die dem oberen Düsenblock (130) zugewandt ist und eine Fläche (124b) des zweiten intermediären Düsenblocks (124) die dem ersten intermediären Düsenblock (122) zugewandt ist gebildet wird gleich oder größer als 14 Grad und gleich oder weniger als 62 Grad ist, und
wobei ein Winkel, der durch eine Fläche (122b) des ersten intermediären Düsenblocks (122) die dem unteren Düsenblock (110) zugewandt ist und eine Fläche (122a) des ersten intermediären Düsenblocks (122) die dem zweiten intermediären Düsenblock (124) zugewandt ist gebildet wird gleich oder größer als 14 Grad und gleich oder weniger als 62 Grad ist,
wobei die Fläche (124b) des zweiten intermediären Düsenblocks (124) der Fläche (122a) des ersten intermediären Düsenblocks (122) zugewandt ist.

2. Mehrschlitzdüsenbeschichter (100') nach Anspruch 1, wobei ein Winkel der durch die erste Fläche (120a) des intermediären Düsenblocks (120) die dem oberen Düsenblock (130) zugewandt ist und die zweite Fläche (120b) des intermediären Düsenblocks (120), die dem unteren Düsenblock (110) zugewandt ist gebildet wird gleich oder weniger als 70 Grad ist.

3. Mehrschlitzdüsenbeschichter (100') nach Anspruch 1, wobei, wenn ein Winkel der durch eine Fläche (130b) des oberen Düsenblocks (130) die der ersten Fläche (120a) zugewandt ist und eine andere Fläche (130a) die an die Fläche (130b) angrenzt gebildet wird als ein Winkel des oberen Düsenblocks (130) bezeichnet wird, ein Winkel der durch eine Fläche (110b) des unteren Düsenblocks (110), die der zweiten Fläche (120b) zugewandt ist und eine andere Fläche (110a) die an die Fläche (110b) angrenzt gebildet wird als ein Winkel des unteren Düsenblocks (110) bezeichnet wird, und der Winkel der durch die erste Fläche (120a) des intermediären Düsenblocks (120) die dem oberen Düsenblock (130) zugewandt ist und die zweite Fläche (120b) des intermediären Düsenblocks (120) die dem unteren Düsenblock (110) zugewandt ist gebildet wird als ein Winkel des intermediären Düsenblocks (120) bezeichnet wird, der Winkel des oberen Düsenblocks (130), der Winkel des intermediären Düsenblocks (120) und der Winkel des unteren Düsenblocks (110) sich alle zu einem Maximum von 180 Grad addieren.

4. Mehrschlitzdüsenbeschichter (100') nach Anspruch 1, wobei der untere Düsenblock (110), der intermediäre Düsenblock (120) und der obere Düsenblock (130) jeweils eine untere Düsenlippe (111), eine intermediäre Düsenlippe (121) und eine obere Düsenlippe (131) umfassen die vordere Endabschnitte davon bilden, eine untere Auslassöffnung (101a) die kommunikativ mit dem unteren Schlitz (101) verbunden ist zwischen der unteren Düsenlippe (111) und der intermediären Düsenlippe (121) gebildet ist, und eine obere Auslassöffnung (102a), die kommunikativ mit dem oberen Schlitz (102) verbunden ist zwischen der intermediären Düsenlippe (121) und der oberen Düsenlippe (131) gebildet ist,
der Mehrschlitzdüsenbeschichter (100) konfiguriert ist, um eine Elektrodenaktivmaterial-Slurry auf eine Oberfläche eines sich kontinuierlich bewegenden Substrats (300) durch mindestens einen des unteren Schlitzes (101) und des oberen Schlitzes (102) zu extrudieren und aufzubringen, und
der Winkel der durch die erste Fläche (120a) und die zweite Fläche (120b) gebildet wird so bestimmt ist das ein Winkel der durch die untere Auslassöffnung (101a) und die obere Auslassöffnung (102a) gebildet wird innerhalb eines Bereichs liegt in dem eine aus der oberen Auslassöffnung (102a) ausgegebene Elektrodenaktivmaterial-Slurry und eine aus der unteren Auslassöffnung (101a) ausgegebene Elektrodenaktivmaterial-Slurry nicht unmittelbar nach dem gleichzeitigen Ausgeben einen Wirbel bilden.

5. Mehrschlitzdüsenbeschichter (100') nach Anspruch 1, wobei der Mehrschlitzdüsenbeschichter (100) konfiguriert ist um eine Elektrodenaktivmaterial-Slurry auf eine Oberfläche eines sich kontinuierlich bewegenden Substrats (300) durch mindestens einen des unteren Schlitzes (101) und des oberen Schlitzes (102) zu extrudieren und aufzubringen, eine Richtung in der die Elektrodenaktivmaterial-Slurry ausgegeben wird fast horizontal liegt so dass der Mehrschlitzdüsenbeschichter (100) installiert ist, die erste Fläche (120a) fast horizontal liegt und eine gegenüberliegende Seite des oberen Düsenblocks (130), die der ersten Fläche (120a) zugewandt ist ebenfalls fast horizontal liegt, und Flächen des unteren Düsenblocks (110), des intermediären Düsenblocks (120) und des oberen Düsenblocks (130) die der Richtung, in der die Elektrodenaktivmaterial-Slurry ausgegeben wird entgegengesetzt sind fast vertikal liegen.

6. Mehrschlitzdüsenbeschichter (100') nach Anspruch 1, wobei der erste intermediäre Düsenblock (122) fest mit dem unteren Düsenblock (110) gekoppelt ist und der zweite intermediäre Düsenblock (124) fest mit dem oberen Düsenblock (130) gekoppelt ist.

7. Mehrschlitzdüsenbeschichter (100') nach Anspruch 1, wobei der untere Düsenblock (110), der intermediäre Düsenblock (120) und der obere Düsenblock (130) jeweils eine untere Düsenlippe (111), eine intermediäre Düsenlippe (121) und eine obere Düsenlippe (131) umfassen, die vordere Endabschnitte davon bilden, eine untere Auslassöffnung (101a), die kommunikativ mit dem unteren Schlitz (101) verbunden ist, zwischen der unteren Düsenlippe (111) und der intermediären Düsenlippe (121) gebildet ist, eine obere Auslassöffnung (102a), die kommunikativ mit dem oberen Schlitz (102) verbunden ist, zwischen der intermediären Düsenlippe (121) und der oberen Düsenlippe (131) gebildet ist, und eine vorbestimmte Stufe zwischen der unteren Auslassöffnung (101a) und der oberen Auslassöffnung (102a) gebildet ist.

8. Mehrschlitzdüsenbeschichter (100') nach Anspruch 1, ferner umfassend:
einen ersten Abstandshalter (113), der zwischen dem unteren Düsenblock (110) und dem intermediären Düsenblock (120) eingelegt ist, um eine Breite des unteren Schlitzes (101) einzustellen, und
einen zweiten Abstandshalter, der zwischen dem intermediären Düsenblock (120) und dem oberen Düsenblock (130) eingelegt ist, um eine Breite des oberen Schlitzes (102) einzustellen.

9. Mehrschlitzdüsenbeschichter (100') nach Anspruch 1, wobei der untere Düsenblock (110) einen ersten Verteiler umfasst, der konfiguriert ist, um eine erste Beschichtungslösung (50) aufzunehmen und kommunikativ mit dem unteren Schlitz (101) verbunden ist, und der intermediäre Düsenblock (120) einen zweiten Verteiler (132) umfasst, der konfiguriert ist, um eine zweite Beschichtungslösung (60) aufzunehmen und kommunikativ mit dem oberen Schlitz (102) verbunden ist.

## Revendications

1. Coucheuse à filière à fentes multiples (100') comprenant une fente inférieure (101) et une fente supérieure (102), la coucheuse à filière à fentes multiples (100') comprenant :
un bloc de filière inférieur (110) ;
un bloc de filière intermédiaire (120) disposé sur le bloc de filière inférieur (110) pour former la fente inférieure (101) entre eux ; et
un bloc de filière supérieur (130) disposé sur le bloc de filière intermédiaire (120) pour former la fente supérieure (102) entre eux,
dans laquelle le bloc de filière intermédiaire (120) comprend un premier bloc de filière intermédiaire (122) et un second bloc de filière intermédiaire (124) en contact face à face l'un avec l'autre de haut en bas et coulissant le long d'une surface de contact pour être mobile l'un par rapport à l'autre,
un angle formé par une surface (124a) du second bloc de filière intermédiaire (124) faisant face au bloc de filière supérieur (130) et une surface (124b) du second bloc de filière intermédiaire (124) faisant face au premier bloc de filière intermédiaire (122) est supérieur ou égal à 14 degrés et inférieur ou égal à 62 degrés, et
dans laquelle un angle formé par une surface (122b) du premier bloc de filière intermédiaire (122) faisant face au bloc de filière inférieur (110) et une surface (122a) du premier bloc de filière intermédiaire (122) faisant face au second bloc de filière intermédiaire (124) est supérieur ou égal à 14 degrés et inférieur ou égal à 62 degrés,
dans laquelle la surface (124b) du second bloc de filière intermédiaire (124) fait face à la surface (122a) du premier bloc de filière intermédiaire (122).

2. Coucheuse à filière à fentes multiples (100') selon la revendication 1, dans laquelle un angle formé par la première surface (120a) du bloc de filière intermédiaire (120) faisant face au bloc de filière supérieur (130) et la seconde surface (120b) du bloc de filière intermédiaire (120) faisant face au bloc de filière inférieur (110) est inférieur ou égal à 70 degrés.

3. Coucheuse à filière à fentes multiples (100') selon la revendication 1, dans laquelle, lorsqu'un angle formé par une surface (130b) du bloc de filière supérieur (130) faisant face à la première surface (120a) et une autre surface (130a) adjacente à la surface (130b) est désigné comme un angle du bloc de filière supérieur (130), un angle formé par une surface (110b) du bloc de filière inférieur (110) faisant face à la seconde surface (120b) et une autre surface (110a) adjacente à la surface (110b) est désigné comme un angle du bloc de filière inférieur (110), et l'angle formé par la première surface (120a) du bloc de filière intermédiaire (120) faisant face au bloc de filière supérieur (130) et la seconde surface (120b) du bloc de filière intermédiaire (120) faisant face au bloc de filière inférieur (110) est désigné comme un angle du bloc de filière intermédiaire (120), l'angle du bloc de filière supérieur (130), l'angle du bloc de filière intermédiaire (120) et l'angle du bloc de filière inférieur (110) totalisent tous un maximum de 180 degrés.

4. Coucheuse à filière à fentes multiples (100') selon la revendication 1, dans laquelle le bloc de filière inférieur (110), le bloc de filière intermédiaire (120) et le bloc de filière supérieur (130) comprennent respectivement une lèvre de filière inférieure (111), une lèvre de filière intermédiaire (121) et une lèvre de filière supérieure (131) formant des parties d'extrémité avant de ceux-ci, un orifice de décharge inférieur (101a) connecté en communication à la fente inférieure (101) est formé entre la lèvre de filière inférieure (111) et la lèvre de filière intermédiaire (121), et un orifice de décharge supérieur (102a) connecté en communication à la fente supérieure (102) est formé entre la lèvre de filière intermédiaire (121) et la lèvre de filière supérieure (131),
la coucheuse à filière à fentes multiples (100) est configurée pour extruder et appliquer une suspension de matériau actif d'électrode sur une surface d'un substrat se déplaçant en continu (300) à travers au moins l'une de la fente inférieure (101) et de la fente supérieure (102), et
l'angle formé par la première surface (120a) et la seconde surface (120b) est déterminé de sorte qu'un angle formé par l'orifice de décharge inférieur (101a) et l'orifice de décharge supérieur (102a) se situe dans une plage dans laquelle une suspension de matériau actif d'électrode déchargée de l'orifice de décharge supérieur (102a) et une suspension de matériau actif d'électrode déchargée de l'orifice de décharge inférieur (101a) ne forment pas de vortex immédiatement après avoir été déchargées simultanément.

5. Coucheuse à filière à fentes multiples (100') selon la revendication 1, dans laquelle la coucheuse à filière à fentes multiples (100) est configurée pour extruder et appliquer une suspension de matériau actif d'électrode sur une surface d'un substrat se déplaçant en continu (300) à travers au moins l'une de la fente inférieure (101) et de la fente supérieure (102), une direction dans laquelle la suspension de matériau actif d'électrode est déchargée se trouve presque horizontalement de telle sorte que la coucheuse à filière à fentes multiples (100) est installée, la première surface (120a) se trouve presque horizontalement et un côté opposé du bloc de filière supérieur (130) faisant face à la première surface (120a) se trouve également presque horizontalement, et les surfaces du bloc de filière inférieur (110), du bloc de filière intermédiaire (120) et du bloc de filière supérieur (130) opposées à la direction dans laquelle la suspension de matériau actif d'électrode est déchargée se trouvent presque verticalement.

6. Coucheuse à filière à fentes multiples (100') selon la revendication 1, dans laquelle le premier bloc de filière intermédiaire (122) est couplé de manière fixe au bloc de filière inférieur (110), et le second bloc de filière intermédiaire (124) est couplé de manière fixe au bloc de filière supérieur (130).

7. Coucheuse à filière à fentes multiples (100') selon la revendication 1, dans laquelle le bloc de filière inférieur (110), le bloc de filière intermédiaire (120) et le bloc de filière supérieur (130) comprennent respectivement une lèvre de filière inférieure (111), une lèvre de filière intermédiaire (121) et une lèvre de filière supérieure (131) formant des parties d'extrémité avant de ceux-ci, un orifice de décharge inférieur (101a) connecté en communication à la fente inférieure (101) est formé entre la lèvre de filière inférieure (111) et la lèvre de filière intermédiaire (121), un orifice de décharge supérieur (102a) connecté en communication à la fente supérieure (102) est formé entre la lèvre de filière intermédiaire (121) et la lèvre de filière supérieure (131), et un gradin prédéterminé est formé entre l'orifice de décharge inférieur (101a) et l'orifice de décharge supérieur (102a).

8. Coucheuse à filière à fentes multiples (100') selon la revendication 1, comprenant en outre :
un premier espaceur (113) interposé entre le bloc de filière inférieur (110) et le bloc de filière intermédiaire (120) pour ajuster une largeur de la fente inférieure (101), et
un deuxième espaceur interposé entre le bloc de filière intermédiaire (120) et le bloc de filière supérieur (130) pour ajuster une largeur de la fente supérieure (102).

9. Coucheuse à filière à fentes multiples (100') selon la revendication 1, dans laquelle le bloc de filière inférieur (110) comprend un premier collecteur configuré pour recevoir une première solution de revêtement (50) et connecté en communication à la fente inférieure (101), et le bloc de filière intermédiaire (120) comprend un second collecteur (132) configuré pour recevoir une seconde solution de revêtement (60) et connecté en communication à la fente supérieure (102).
